# FASCICULE DE BREVET EUROPEEN

(11) **EP 1 516 459 B1**
(45) Date de publication et mention de la délivrance du brevet: **16.04.2008**
(21) Numéro de dépôt: 03761630.7
(22) Date de dépôt: 24.06.2003
(51) Int. Cl.: H04L 12/28

(54) **PROCÉDÉ DE TRANSMISSION DE PAQUETS DE DONNÉES ENTRE DEUX UNITÉS ESCLAVES ET UNE UNITÉ MAÎTRE COMPRENANT DEUX PROCESSEURS**
VERFAHREN ZUR PAKETDATENÜBERTRAGUNG ZWISCHEN ZWEI SLAVE-EINHEITEN UND EINER MASTER-EINHEIT MIT ZWEI PROZESSOREN
METHOD FOR PACKET DATA TRANSMISSION BETWEEN TWO SLAVE UNITS AND A MASTER UNIT COMPRISING TWO PROCESSORS

(30) Priorité: 27.06.2002 FR 0208004
(43) Date de publication de la demande: 23.03.2005
(73) Titulaire: STMicroelectronics S.A., 92120 Montrouge (FR)
(72) Inventeur: IANOS, Anca-Marina, F-38000 Grenoble (FR)
(74) Mandataire: Loisel, Bertrand
(86) Numéro de dépôt international: PCT/FR2003/001934
(87) Numéro de publication internationale: WO 2004/004225

(56) Documents cités:
- EP-A- 1 107 521
- WO-A-01/69869
- "Specification Volume 1, Specification of the Bluetooth Sytem, Core, Version 1.1, Part H:1, HOST CONTROLLER INTERFACE FUNCTIONAL SPECIFICATION" SPECIFICATION OF THE BLUETOOTH SYSTEM, [en ligne] vol. 1, - 22 février 2001 (2001-02-22) pages 1,536-780, XP002235463 Extrait de l'Internet: <URL:http://www.bluetooth.com> [extrait le 2003-03-19]
- "Specification Volume 1, Specification of the Bluetooth Sytem, Core, Version 1.1, Part D, LOGICAL LINK CONTROL AND ADAPTATION PROTOCOL SPECIFICATION" SPECIFICATION OF THE BLUETOOTH SYSTEM, [en ligne] vol. 1, - 22 février 2001 (2001-02-22) pages 1,254-330, XP002235462 Extrait de l'Internet: <URL:http://www.bluetooth.com> [extrait le 2003-03-19]

## Description

La présente invention concerne un procédé de transmission de paquets de données par radio au sein d'un réseau local comprenant au moins deux unités de communication esclaves et une unité de communication maître par laquelle transitent tous les paquets de données transmis au sein du réseau.

Elle concerne plus particulièrement un tel procédé adapté à une configuration de l'unité maître selon laquelle celle-ci comprend deux processeurs reliés entre eux par une interface interne.

Il est connu, notamment du document EP 1 107 521, d'utiliser une structure en étoile pour la transmission de données au sein d'un réseau comprenant au moins trois unités de communication. Une telle structure est particulièrement adaptée pour des réseaux comprenant un nombre réduit d'unités en communication les unes avec les autres. Dans une telle structure de réseau, l'une des unités joue un rôle de coordonnateur auquel sont asservies les autres unités. Toutes les données destinées à être transmises entre deux unités quelconques d'un tel réseau sont d'abord reçues par l'unité maître qui ré-émet ensuite à destination de l'une des unités esclaves les données initialement destinées à cette dernière.

Il est par ailleurs souvent avantageux de répartir, au sein d'une unité de communication, les fonctions exécutées par cette unité entre deux processeurs reliés entre eux par une connexion interne à l'unité.

Le premier processeur peut être plus spécialement adapté pour l'exécution d'une application particulière. Pour cela, il peut comporter des moyens spécifiquement appropriés pour l'exécution du programme de cette application, tels que des éléments de mémoire déterminés ou un contrôleur déterminé d'interfaces de saisie d'entrées et/ou de présentation de données destinées à un utilisateur de l'unité.

Le second processeur exécute des opérations dites de bas niveau nécessaires pour la transmission de données entre cette unité de communication et une unité extérieure appartenant au réseau. Il configure notamment les données sous une forme adaptée à leur transmission, telle que, notamment, une répartition des données dans des paquets adaptés au type de transmission utilisé entre les différentes unités de communication. Il commande en outre un émetteur-récepteur de signaux échangés avec les unités de communication extérieures.

Un tel modèle de second processeur peut être commun à toutes les unités de communication fonctionnant selon un même mode de transmission. Il en résulte une réduction du coût du second processeur, par effet d'échelle pour sa fabrication. Par contre, ce second processeur peut être associé dans une même unité à un premier processeur de modèle variable en fonction de l'application principale destinée à être exécutée dans cette unité. Une spécialisation de chaque unité de communication est ainsi possible, tout en bénéficiant de la réduction de coût liée au second processeur.

On considère dans la suite une répartition des fonctions entre les deux processeurs d'une unité de communication selon laquelle l'application exécutée par le premier processeur gère la transmission des données relatives à cette application au sein de l'ensemble du réseau. En particulier, la transmission de données entre deux unités esclaves est contrôlée par l'application elle-même, qui remplit une fonction de pivot de retransmission de données à destination d'une unité esclave, en fonction de l'unité destinataire identifiée pour ces données. Un tel rôle est couramment dévolu au programme d'application résidant dans l'unité maître, du fait qu'il est seul capable d'interpréter toutes les données qui se rapportent à l'application et, par conséquent, de déterminer si un traitement doit être appliqué à ces données ou si celles-ci doivent être retransmises sans modifications à l'une des unités esclaves.

Toutes les données échangées entre deux unités quelconques du réseau sont donc transmises au premier processeur de l'unité maître par la connexion entre les deux processeurs interne à cette unité. Il en résulte une consommation d'énergie liée à cette transmission interne, d'autant plus notable que la quantité de données échangées au sein du réseau est considérable. Dans le cas où l'unité maître possède une source d'alimentation autonome, de type piles ou batteries, son autonomie est alors réduite du fait de la transmission en interne d'une quantité importante de données.

Un autre inconvénient de la transmission d'une quantité importante de données entre les deux processeurs de l'unité maître réside dans la nécessité d'équiper la connexion interne de transmission entre les deux processeurs d'une mémoire tampon suffisante. Outre le coût de cette mémoire tampon, celle-ci engendre encore une consommation d'énergie supplémentaire.

Un but de la présente invention consiste à pallier les inconvénients précités.

L'invention concerne donc un procédé de transmission de paquets de données par radio au sein d'un réseau local comprenant au moins trois unités de communication, l'une de ces unités ayant un rôle d'unité maître et les autres unités ayant un rôle d'unités esclaves coordonnées par l'unité maître, l'unité maître comprenant un premier et un second processeurs reliés entre eux par une connexion interne à l'unité maître. Le premier processeur exécute une application et le second processeur exécute des opérations de transmission de données entre l'unité maître et l'une quelconque des unités esclaves. Selon l'invention, le procédé comprend les étapes suivantes pour la transmission de données produites par une première unité esclave à destination d'une seconde unité esclave :
a- émission de premiers paquets de données par la première unité esclave ;
b- réception des premiers paquets de données par l'unité maître;
c- au niveau d'une couche de protocole assurant une mise en forme et un rétablissement de données échangées par la connexion interne à l'unité maître, analyse par le second processeur d'éléments d'adressage associés aux premiers paquets de données pour déterminer si certains éléments d'adressage satisfont une condition spécifiée dans une consigne de ré-adressage; et
d- si la condition est satisfaite, émission par l'unité maître à destination de la seconde unité esclave de seconds paquets de données correspondant aux premiers paquets de données.

Outre la réduction précitée de la consommation énergétique de l'unité maître, un avantage du procédé de l'invention réside dans une réduction de la durée de transmission entre deux unités esclaves. En effet, de telles données ne transitent plus par le premier processeur de l'unité maître, ce qui supprime par conséquent les délais liés à la transmission entre les deux processeurs de l'unité maître. Parmi les délais supprimés figurent ceux des étapes de mise en forme des données pour la transmission entre les deux processeurs, d'attente des données dans une mémoire tampon avant cette transmission, ainsi que de traitement des données par l'application au sein du premier processeur.

Dans le mode de mise en oeuvre préféré de l'invention, si certains des éléments d'adressage analysés ne satisfont pas la condition spécifiée, le second processeur transmet au premier processeur par la connexion interne à l'unité maître, lors de l'étape d, une partie au moins des données correspondant aux premiers paquets auxquels sont associés ces éléments d'adressage. Ainsi, le procédé de l'invention n'entrave pas l'accès au programme d'application de l'unité maître, pour des données qui sont destinées à ce programme en provenance de l'une quelconque des unités esclaves. Le second processeur possède par conséquent une fonction d'aiguillage des données correspondant à tous les premiers paquets reçus par l'unité maître, soit à destination d'une unité esclave sous forme de seconds paquets ré-émis, soit à destination du premier processeur par la connexion interne à l'unité maître.

L'application exécutée dans le premier processeur de l'unité maître, en tant que programme assurant le contrôle des données échangées entre les différentes unités, associe des éléments d'adressage entre eux, à partir desquels est produite la consigne de ré-adressage. Ces éléments d'adressage associés entre eux sont transmis au second processeur par la connexion interne à l'unité maître. Ils peuvent être obtenus par une interrogation spécifique des unités esclaves par l'unité maître. Ils peuvent aussi être lus par le second processeur dans des paquets de signalisation échangés lors d'établissements de connexions entre des unités esclaves et l'unité maître.

Cette consigne de ré-adressage possède deux fonctions. D'une part elle spécifie des critères de sélection mis en oeuvre par le second processeur pour trier parmi tous les paquets de données reçus par l'unité maître de la part des unités esclaves ceux qui sont destinés à une autre unité esclave, sans traitement intermédiaire par le programme d'application résidant dans l'unité maître. Cette sélection est opérée sur la base de la condition spécifiée dans la consigne de ré-adressage et portant sur certains des éléments d'adressage associés aux paquets. Ces éléments d'adressage peuvent être déterminés par le second processeur d'après des paramètres particuliers de transmission tels que, par exemple, une référence de canal logique. Ils peuvent aussi être lus dans certains au moins des paquets de données reçus par l'unité maître de la part des unités esclaves, soit au niveau d'une en-tête des ces paquets, soit dans les données transportées par ces paquets. Dans ce dernier cas, la consigne de ré-adressage contient une indication de l'emplacement des éléments d'adressage concernés au sein des paquets de données. Le ou les éléments d'adressage lus dans les paquets de données reçus peuvent être, en particulier, un indicateur de l'unité de communication destinataire de données contenues dans ces paquets reçus.

Selon certains mode de communication, des données d'une même session de communication entre deux unités sont contenues dans une série de paquets de données successivement émis par une première unité productrice des données, et une partie au moins des éléments d'adressage associés à tous les paquets de la série est portée par le premier paquet de ladite série. Dans ce cas, le second processeur détermine d'après le premier paquet, en fonction de la consigne et de la condition de ré-adressage, le traitement à appliquer individuellement à l'ensemble des paquets de données de la série.

La seconde fonction de la consigne de ré-adressage consiste à spécifier le mode de construction des seconds paquets de données émis lors de l'étape d correspondant à des premiers paquets de données dont les éléments d'adressage satisfont la condition de ré-adressage. Les seconds paquets de données peuvent, par exemple, être directement obtenus par le second processeur à partir des premiers paquets de données auxquels ils correspondent individuellement en remplaçant, pour certains au moins des premiers paquets, des éléments d'adressage initiaux par des éléments d'adressage correspondant à l'unité esclave destinataire des données.

L'invention concerne aussi un système de transmission de paquets de données adapté pour la mise en oeuvre d'un procédé de transmission tel que décrit précédemment.

L'invention concerne encore un processeur de contrôle d'une transmission de données par radio sous forme de paquets comprenant une interface permettant de connecter ledit processeur de contrôle à un processeur hôte d'une application de traitement de données, et comprenant en outre :
- des moyens de réception par l'interface de connexion de signaux correspondant à des éléments d'adressage associés entre eux ;
- des moyens d'élaboration d'une consigne de ré-adressage à partir des éléments d'adressage associés entre eux, la consigne de ré-adressage comprenant une condition de ré-adressage ;
- des moyens d'enregistrement de la consigne de ré-adressage ;
- des moyens d'analyse de paquets de données reçus en fonction de la condition de ré-adressage ;
- des moyens de remplacement d'éléments d'adressage initiaux de certains au moins des paquets de données reçus satisfaisant la condition de ré-adressage par de nouveaux éléments d'adressage déterminés d'après la consigne de ré-adressage ; et
- des moyens de commande d'une émission de paquets de données correspondant aux paquets de données reçus satisfaisant la condition de ré-adressage.

Les éléments d'adressage remplacés peuvent comprendre, en particulier, un indicatif de connexion et/ou une référence de canal logique.

Eventuellement, le processeur de contrôle peut comprendre en outre des moyens de lecture dans certains au moyens des paquets reçus d'une référence de canal logique et/ou d'un indicateur de l'unité de communication destinataire des données contenues dans les paquets reçus.

Il peut comprendre encore des moyens de transmission par l'interface de connexion de données correspondant à des paquets reçus ne satisfaisant pas la condition de ré-adressage.

L'invention concerne en outre une unité de communication par radio comprenant un tel processeur de contrôle.

Elle concerne enfin un processeur hôte d'au moins une application comprenant des moyens d'exécution de l'application, des moyens de gestion de communications au sein d'un réseau local en tant qu'unité maître, et des moyens pour associer des éléments d'adressage de paquets de données entre eux, ce processeur hôte comprenant en outre une interface de connexion d'un processeur de contrôle d'une transmission de paquets de données au sein du réseau local, et des moyens de transmission par l'interface de connexion de signaux correspondant aux éléments d'adressage associés entre eux ou porteurs de données traitées par l'application.

D'autres particularités et avantages de la présente invention apparaîtront dans la description ci-après d'un exemple de mise en oeuvre non limitatif, en référence aux dessins annexés, dans lesquels :
- la figure 1 représente un réseau local auquel s'applique l'invention;
- la figure 2 illustre la structure de protocoles d'une unité maître à laquelle s'applique l'invention ;
- la figure 3 représente une structure de paquets de données échangés entre les deux processeurs de l'unité maître de la figure 2 ;
- la figure 4 illustre la structure de protocoles d'un processeur de contrôle selon l'invention.

L'invention est maintenant décrite en détail pour un réseau de transmission conforme à la norme «Bluetooth™», bien connue de l'Homme du métier.

La norme Bluetooth concerne en particulier la transmission de données entre plusieurs unités de communication formant un réseau local, appelé «piconet». Ce réseau, dans le mode de fonctionnement considéré dans la suite, comprend une unité maître telle qu'introduite précédemment, et au plus sept unités esclaves coordonnées par l'unité maître. Selon une particularité des des «piconets» spécifiée par la norme Bluetooth, toutes les unités de communication d'un «piconet» sont interchangeables vis-à-vis des rôles d'unité maître ou esclave. Pour cela, chaque unité de communication incorpore des moyens pour coordonner des communications au sein du «piconet» et des moyens pour fonctionner de façon coordonnée par une unité maître extérieure, ces moyens étant alternativement activés en fonction de l'unité de communication ayant le rôle d'unité maître.

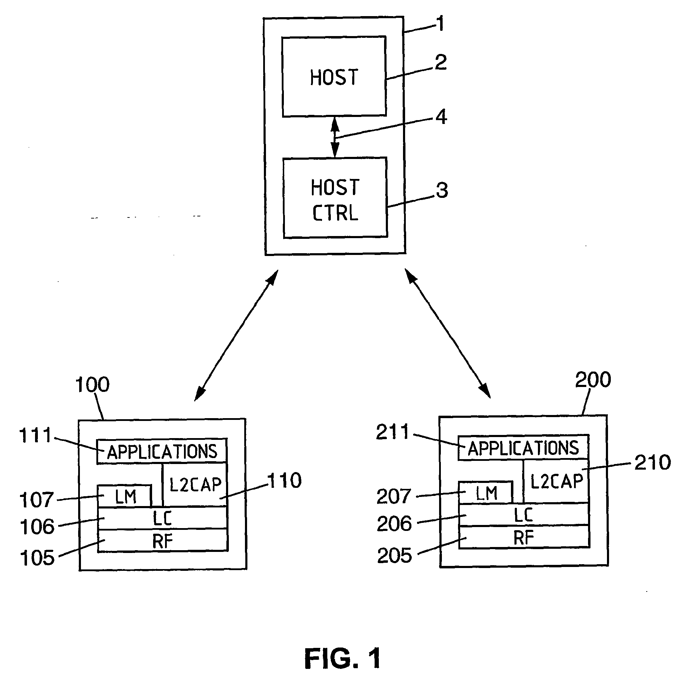

La figure 1 représente trois unités d'un même «piconet», parmi lesquelles l'unité 1 remplit la fonction du maître. Ce rôle est attribué à l'unité 1 dans toute la suite. Les unités 100 et 200 sont esclaves. Chaque unité 1, 100, 200 peut être de type varié, tel que, par exemple, une unité informatique, une console de jeux, un clavier, un écran de visualisation, une imprimante, un instrument domotique, un terminal de communication, etc. Il contient au moins un programme applicatif, ou programme d'application, permettant en particulier à cette unité de remplir sa fonction principale, à savoir un traitement de données pour une unité informatique ou une console de jeux, une saisie de données pour un clavier, un affichage de données pour un écran, une impression pour une imprimante, etc.

De façon usuelle dans le domaine des communications, chaque unité est conçue conformément à une pile de protocoles lui permettant d'échanger des données de façon compatible avec les autres unités du «piconet». Parmi ces protocoles peuvent figurer, par exemple :
- un protocole de commande d'émission et de réception RF, correspondant aux couches 105 et 205 respectivement pour les unités 100 et 200;
- un protocole d'exécution d'opérations dites de bas niveau de transmission (ou «baseband»), tel que le protocole «Link Controller» (ou LC) connu de l'Homme du métier, et correspondant aux couches 106 et 206 pour les unités 100 et 200 ;
- un protocole d'initialisation et de gestion des communications entre les unités du «piconet» correspondant aux couches 107 et 207, tel que, par exemple, le protocole «Link Manager» (ou LM) aussi connu de l'Homme du métier ;
- un protocole de multiplexage des signaux destinés, notamment, à des applications différentes. Ce peut être le protocole «Logical Link Control and Adaptation Protocol» (ou L2CAP), encore connu de l'Homme du métier. Les couches 110 et 210 du protocole L2CAP assurent en outre, notamment, la mise sous forme de paquets des données destinées à être transmises, ou, à l'inverse, le regroupement de données reçues dans des paquets successifs ; et
- au moins un programme d'application 111, 211 résidant dans chaque unité. Ces programmes d'applications sont les destinataires finals des données échangées au sein du «piconet». Plusieurs unités échangeant des données relatives à une application déterminée doivent contenir chacun un programme de cette application afin de produire, interpréter et traiter les données échangées dans le cadre de cette application.

Chaque application est identifiée par une valeur spécifique d'un indicateur d'application appelé «Protocol Service Multiplexer» (ou PSM) par l'Homme du métier. Cet indicateur permet notamment à la couche L2CAP de chaque unité 1, 100, 200 d'attribuer les données contenues dans chaque paquet de données L2CAP reçu par cette unité au programme d'application résidant dans ladite unité qui correspond à l'application à laquelle se rapportent les données.

Deux structures sont possibles pour chaque unité de communication. Dans l'une de ces structures, couramment désignée par «embedded», les opérations de tous les protocoles cités précédemment ainsi que celles des programmes d'applications sont exécutées dans un processeur unique de l'unité. Les unités 100 et 200 de la figure 1 possèdent cette structure.

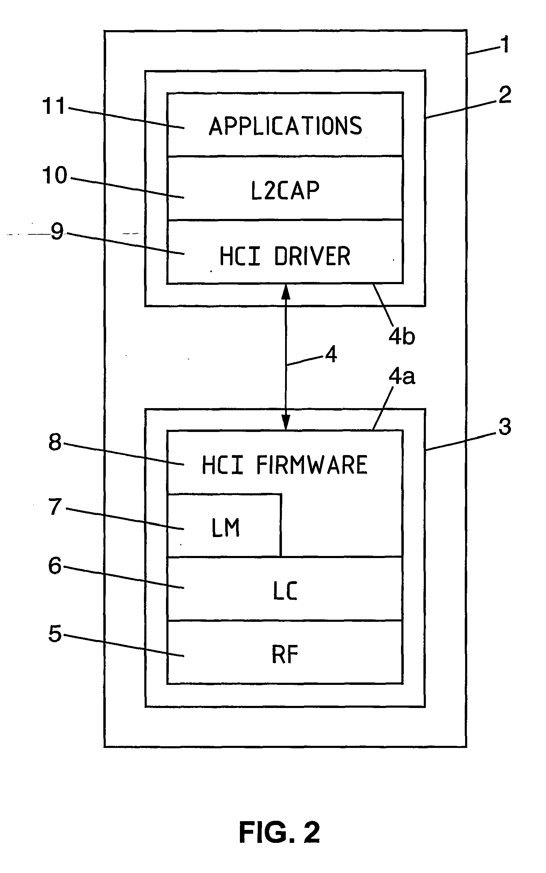

Pour la mise en oeuvre de l'invention, l'unité maître 1 possède une structure différente, à deux processeurs, détaillée à la figure 2. Un premier processeur 2, appelé hôte (ou «host processor»), héberge au moins un programme d'une application 11 supportée par l'unité 1, ainsi que le protocole L2CAP 10. Un second processeur 3, dit processeur de contrôle (ou «host controller processor»), héberge les couches dites de niveaux inférieurs correspondant aux opérations relatives à la transmission radio, à savoir les couches 5, 6, et 7 respectivement des protocoles RF, LC et LM.

Dans cette structure à deux processeurs, les processeurs 2 et 3 sont connectés entre eux pour échanger des données au travers d'une connexion 4 interne à l'unité 1. Cette connexion 4 peut être de différents types, tels que, par exemple, une connexion USB («Universal Serial Bus») ou une connexion UART («Universal Asynchronous Receiver Transceiver»). Elle correspond aux interfaces d'échange de données 4b et 4a des processeurs 2 et 3 respectivement. Deux couches 8 et 9 d'un protocole supplémentaire, pouvant être le protocole «Host Controller Interface» (ou HCl), connu de l'Homme du métier, assurent au sein de chaque processeur 2, 3 la mise en forme et le rétablissement des données échangées par leurs interfaces respectives 4b et 4a. La couche 8 portée par le processeur de contrôle 3 est appelée «HCl firmware» et la couche 9 portée par le processeur hôte 2 est appelée «HCl driver». Les données échangées par la connexion interne 4 sont réparties dans des paquets de données spécifiques, appelés paquets HCl.

L'échange de données entre des unités distinctes du «piconet» est effectué sous forme de paquets de données transmis par radio, en utilisant la bande de fréquence 2400 - 2483,5 MégaHertz, par exemple. En relation avec la norme Bluetooth, on se restreint dans la suite à un mode de communication asynchrone («Asynchronous Connection-Less link» ou ACL) entre les différentes unités du «piconet». Ce mode est particulièrement adapté à la transmission de données, pouvant être éventuellement des données audio ou vidéo, par opposition à une transmission de parole.

Dans le fonctionnement du «piconet» considéré, tous les paquets de données émis par une unité quelconque du réseau sont destinés à une autre unité déterminée du réseau. Ce fonctionnement est qualifié de «point à point». Pour cela, des éléments d'adressage sont associés à chaque paquet de données transmis qui permettent de déterminer l'unique unité destinataire des données de ce paquet.

D'après la structure de communication en étoile au sein d'un «piconet», avec un rôle d'aiguilleur des données pour l'unité maître au centre le l'étoile, des paquets de données émis par une unité esclave sont systématiquement adressés en premier lieu à l'unité maître. Le programme d'application résidant dans l'unité maître doit alors déterminer si ces données lui sont destinées ou si elles sont destinées au programme d'application résidant dans l'une des autres unités esclaves.

On suppose qu'une liaison ACL est établie entre l'unité maître 1 et l'unité esclave 100 d'une part, et entre l'unité maître 1 et l'unité esclave 200 d'autre part. Les trois unités sont par conséquent dans un état d'attente de réception de données, couramment qualifié d'état «open» par l'Homme du métier. A partir de cet état, l'unité esclave 100 peut émettre des données à destination soit de l'unité maître 1, soit de l'unité esclave 200. Dans les deux cas, ces données sont transmises sous forme de paquets reçus dans un premier temps par le processeur de contrôle 3 de l'unité maître 1 qui doit en transmettre le contenu soit au processeur hôte 2 par la connexion interne 4, soit à l'unité esclave 200 par une seconde émission radio.

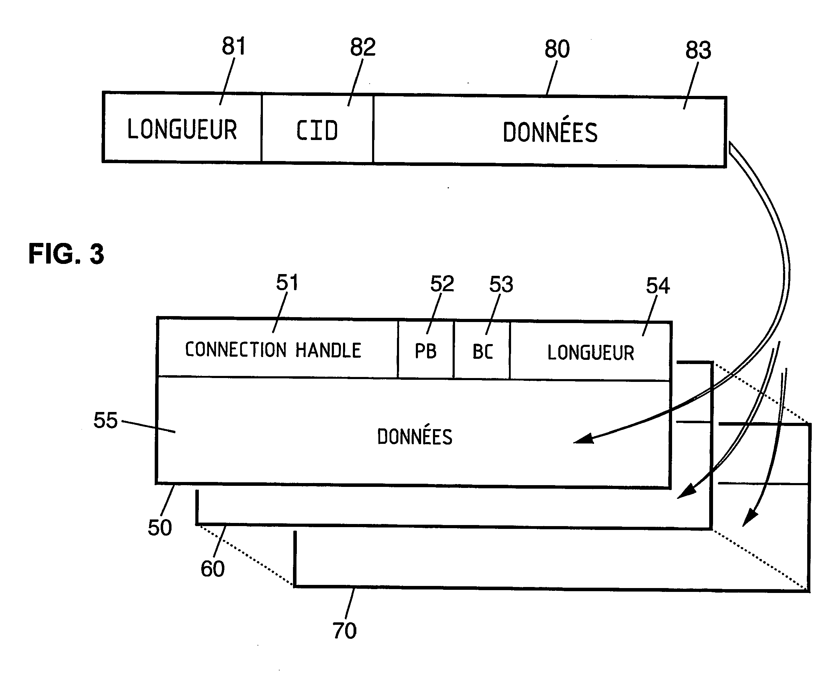

La figure 3 représente une structure d'un paquet de données 80 émis par l'unité esclave 100 au niveau de la couche de protocole L2CAP 110. De façon connue, ce paquet de données 80 peut posséder les champs suivants :
- un champ 83 de données (ou «payload»), par exemple limité à 65533 octets, dédié à des données destinées à être traitées par le programme d'application 11 de l'unité maître 1 ou par celui 211 de l'unité esclave 200;
- un champ 81 indiquant la longueur en bytes du champ 83 ; et
- un champ 82 de deux octets contenant une référence de canal logique («Channel IDentifier» ou CID) attribué par le programme d'application 11 du maître 1 à des paquets de données 80 émis par l'esclave 100.

Plusieurs CID distincts peuvent être affectés par le programme d'application 11 identifié par l'indicateur PSM pour des paquets de données L2CAP émis par l'unité esclave 100. Dans ce cas, deux CID différents peuvent être utilisés de façon à distinguer des paquets émis par l'unité esclave 100 contenant des données destinées au programme d'application 11 de l'unité maître 1 d'une part, de paquets émis par l'unité esclave 100 contenant des données destinées au programme d'application 211 de l'unité esclave 200 d'autre part. Dans ce cas, la détermination du CID des paquets de données L2CAP au niveau du processeur de contrôle 3 permet d'orienter les données contenues par ceux-ci soit vers le processeur hôte 2 par la connexion interne 4, soit pour une ré-émission par radio à destination de l'unité esclave 200.

Le programme d'application 11 identifié par l'indicateur PSM peut aussi affecter le même CID à des paquets L2CAP émis par l'unité esclave 100 contenant des données destinées au programme d'application 11 du maître 1 ou au programme d'application 211 de l'unité esclave 200. Dans ce cas, pour mettre en oeuvre le procédé de l'invention, processeur 3 est programmé pour lire dans le champ de données 83 un élément d'adressage supplémentaire permettant de différencier l'unité maître 1 de l'unité esclave 200 comme destinataire des données du paquet L2CAP.

Pour être transmis par la connexion 4 entre la couche HCl «firmware» 8 hébergée par le processeur de contrôle 3 et la couche HCl «driver» 9 hébergée par le processeur hôte 2 au sein de l'unité maître 1, les paquets de données L2CAP sont découpés en segments successifs et encapsulés dans des paquets HCl transmis un à un. De façon connue de l'Homme du métier, chaque paquet HCl 50, 60, 70 (figure 3) comprend les champs suivants :
- un champ 51 de 12 bits, réservé à un indicateur de canal de transmission au niveau de la couche de protocole HCl, appelé indicatif de connexion (ou «connection handle»). L'indicatif de connexion peut être considéré comme un tunnel spécialement dédié à la transmission de paquets HCl entre deux unités de communication ;
- un champ 55 de données dans lequel est placé un segment de paquet de données L2CAP 80 ;
- un champ 54 de deux bytes d'indication de la longueur des données exprimée en bytes ;
- un champ 53 d'un indicateur de mode de communication en diffusion («BroadCast flag» ou BC). Ce champ contient la valeur réservée 00 pour le fonctionnement point à point considéré pour la mise en oeuvre de l'invention; et
- un champ 52 d'un indicateur de poursuite d'une série de paquets HCl («Packet Boundary» ou PB) recevant une valeur 01 ou 10 selon si le paquet HCl est ou non le premier paquet d'une série de paquets HCl transportant comme données des segments successifs d'un même paquet L2CAP.

Les données émises par l'unité esclave 100 sont reçues par le processeur 3 sous forme de paquets L2CAP 80 répartis dans une série de paquets HCl successifs 50, 60, 70,... Tous les paquets HCl d'une même série, possédant la valeur 10 dans le champ PB 52 après un premier paquet HCl de la série possédant la valeur 01 dans ce champ, sont donc associés à un même canal logique caractérisé par une même valeur de CID.

Le processeur 3 détermine, au niveau de la couche HCl «firmware» 8, l'orientation à affecter à chaque paquet HCl, en fonction d'éléments d'adressage associés à ce paquet HCl. Pour cela, un ensemble d'associations entre des éléments d'adressage identifiés est mémorisé au niveau de la couche HCl «firmware» 8, permettant d'orienter le contenu de chaque paquet HCl soit vers le processeur hôte 2 soit pour une ré-émission à destination de l'unité esclave 200.

Selon un premier mode de mise en oeuvre de l'invention, cette orientation est déterminée en fonction du CID du paquet L2CAP contenu dans une série de paquets HCl 50, 60, 70,... successivement reçus. L'unité esclave 200 et l'unité maître 1 sont alors associées à des CID respectifs distincts pour des paquets émis par l'unité esclave 100 et contenant des données destinées soit à l'unité esclave 200 soit à l'unité maître 1. Le premier paquet HCl 50 d'une série correspondant à un paquet L2CAP donné est identifié d'après son champ PB 52, et la valeur de CID caractéristique du paquet de données L2CAP est lue dans le champ 55 de ce premier paquet HCl 50. Cette valeur de CID lue est alors automatiquement associée à tous les paquets HCl ultérieurs se rapportant au même paquet de données L2CAP, portant la valeur 10 dans leurs champs PB 52 respectifs, jusqu'à la lecture de la valeur 01 dans le champ PB 52 d'un paquet HCl marquant le début d'une nouvelle série, associée à un autre paquet de données L2CAP.

Si la valeur de CID lue correspond à celle réservée à des données destinées au programme d'application 11 de l'unité maître 1, le processeur de contrôle 3 transmet tous les paquets HCl successifs 50, 60, 70,... de la série au processeur hôte 2 par la connexion interne 4. Les données de ces paquets HCl sont alors traitées de façon usuelle par les couches 9 et 10, puis par le programme d'application 11, si la valeur de PSM associée correspond au programme d'application 11.

Si la valeur de CID lue correspond à celle réservée à des données destinées au programme d'application 211 de l'unité esclave 200, le processeur de contrôle 3 remplace, dans le champ 55 du premier paquet HCl 50 de la série, la valeur de CID initiale, correspondant à des paquets transmis entre l'unité esclave 100 et l'unité maître 1 pour des données destinées à l'unité esclave 200, par la valeur de CID réservée à des paquets de données en provenance de l'unité esclave 100 et retransmis par l'unité maître 1 à l'unité esclave 200. Le PSM indiqué dans le champ 55 du premier paquet HCl 50 est inchangé. Tous les paquets HCl de la série 50, 60, 70,... sont alors successivement traités par le processeur 3 pour leur émission à destination de l'unité esclave 200, selon la valeur de CID associée au paquet L2CAP auquel ils correspondent. En particulier, l'indicatif de connexion 51 initial de chaque paquet HCl est remplacé par l'indicatif de connexion dédié à la transmission de paquets HCl de l'unité maître 1 à l'unité esclave 200. Ainsi, au niveau HCl, un paquet de données ré-émis par l'unité maître 1 à destination de l'unité esclave 200 possède une structure identique à celle d'un paquet HCl en provenance de l'unité esclave 100, hormis l'indicatif de connexion 51, et le CID 82 pour le premier paquet HCl d'une série correspondant à un paquet de données L2CAP donné. La nouvelle valeur de CID 82 est celle attribuée aux retransmissions de données en provenance de l'unité esclave 100, par l'unité maître 1 vers l'unité esclave 200. Le nouvel indicatif de connexion 51 est celui attribué aux transmissions de données ACL entre l'unité maître 1 et l'unité esclave 200. Les données 83 du paquet L2CAP 80 sont ensuite traitées par le programme d'application 211 si la valeur de PSM associée correspond au programme d'application 211.

Selon un second mode de mise en oeuvre de l'invention, l'unité esclave 200 et l'unité maître 1 sont associées à des canaux logiques 82 identiques pour des paquets émis par l'unité esclave 100 et contenant des données destinées soit à l'unité esclave 200 soit à l'unité maître 1. Par conséquent, la valeur de CID lue dans le premier paquet HCl 50 de la série relative à un même paquet de données L2CAP ne permet plus de déterminer l'unité de communication du «piconet» destinataire des données. L'analyse par le processeur 3 des éléments d'adressage associés aux paquets HCl 50, 60, 70,... comprend alors une lecture d'au moins un élément d'adressage supplémentaire dans certains au moins des paquets HCl pour déterminer l'unité de communication destinataire. Cet élément d'adressage lu dans le champ de données 55 du premier paquet HCl 50 de la série est un indicateur de l'unité destinataire des données. Cet indicateur peut être, par exemple, une adresse Bluetooth distinctive affectée à cette unité lors de sa fabrication (ou BD_ADDR) ou une adresse logique appelée «application slave identifier» (APP_ID) affectée par le programme d'application 11.

Pour cela, la consigne de ré-adressage doit contenir une indication de l'emplacement, dans le champ de données 55, auquel se trouve l'indicateur de l'unité destinataire des données. Cette indication a la forme, par exemple, d'un nombre d'octets (connu sous l'appellation de «offset») comptés à partir du premier octet d'un paquet HCl. Afin que le processeur 3 puisse ré-orienter tous les paquets HCl d'une même série, l'indicateur de l'unité destinataire des données doit figurer dans le champ de données 55 du premier paquet HCl 50 de la série. Le processeur 3 détermine ainsi l'unité destinataire de tous les paquets HCl de la série d'après le premier paquet HCl 50 de la série, et lui adresse un par un tous les paquets HCl successifs en remplaçant dans chacun d'eux l'indicatif de connexion initial 51 par l'indicatif de connexion dédié à une transmission de l'unité maître 1 vers l'unité esclave 200. Il remplace en outre dans le premier paquet HCl 50 la valeur de CID 82 caractéristique de paquets HCl transmis de l'unité esclave 100 vers l'unité maître 1 par la valeur de CID caractéristique de paquets HCl transmis de l'unité maître 1 vers l'unité esclave 200. Ce renvoi systématique des paquets HCl 50, 60, 70,... par le processeur 3 est arrêté pour le premier paquet HCl présentant la valeur 01 dans le champ PB 52.

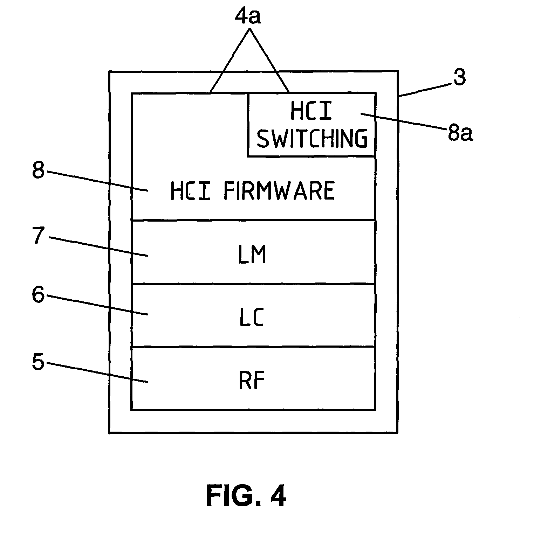

L'analyse et la retransmission éventuelle de paquets HCl précédemment décrites peuvent être illustrées schématiquement par l'ajout d'une partie de protocole HCl à la pile de protocole hébergée par le processeur 3 (figure 4). Outre les couches de protocole représentées à la figure 2, correspondant aux fonctions connues de l'Homme du métier, la partie 8a de protocole intitulée commutation HCl (ou «HCl switching») correspond aux fonctions suivantes :
- élaboration de la consigne de ré-adressage à partir d'éléments d'adressage associés entre eux reçus par l'interface 4a;
- mémorisation de la consigne de ré-adressage;
- analyse des paquets HCl produits par la couche «HCl firmware» 8 selon la consigne de ré-adressage; et
- orientation de ces paquets HCl soit vers l'interface 4a soit en vue d'un traitement correspondant à la couche LC 6.

La consigne de ré-adressage comprend une table de commutation associant des éléments d'adressage finals à des éléments d'adressage initiaux figurant en entrée de la table.

La condition de ré-adressage permet de déterminer si les éléments d'adressage associés à un paquet HCl donné correspondent à l'un des éléments d'adressage initiaux. Dans le cas positif, les éléments d'adressage finals indiqués par la table de commutation sont affectés au paquet HCl afin que celui-ci soit ré-émis à destination de l'unité esclave destinataire des données portées par ce paquet.

Une première méthode d'actualisation de la table de commutation utilise la primitive PING connue de l'Homme du métier. Cette primitive est produite par le programme d'application 11 de l'unité maître 1 pour la couche L2CAP 10 et concerne chaque unité esclave identifiée, par exemple, par son adresse Bluetooth (BD_ADDR). Cette primitive déclenche une interrogation de toutes les unités esclaves par l'unité maître 1, au niveau de la couche L2CAP. De façon connue en soi, cette interrogation peut procéder, notamment, par l'envoi par radio d'un paquet de type ECHO_REQUEST à chaque unité esclave. Chaque unité esclave répond alors à l'unité maître 1 par un paquet de type ECHO_RESPONSE comprenant les CID affectés à l'unité maître 1 et à cette unité esclave particulière pour des paquets de données L2CAP envoyés respectivement par l'unité maître 1 à cette unité esclave et par cette unité esclave à l'unité maître 1. Ces éléments sont ensuite retransmis au programme d'application 11 de l'unité maître 1 par la primitive PING.

Le programme d'application 11 de l'unité maître 1 dispose alors de tous les éléments d'adressage intervenant lors d'échanges de données se rapportant à l'application concernée, à savoir, les CID des unités 100, 200 et de l'unité maître 1 pour chaque sens de transmission, le BD_ADDR et le APP_ID de chaque unité esclave. Le programme d'application 11 envoie ensuite à la couche HCl «firmware» 8 un paquet de commande HCl spécialement dédié lors de la conception des processeurs 2 et 3. Ce paquet HCl peut être repéré par une valeur spécifique placée, par exemple, dans le champ OGF («Opcode Group Field») de ce paquet, connu de l'Homme du métier. Ce paquet de commande HCl contient une instruction d'association entre des éléments d'adressage initiaux et finals.

Une seconde méthode d'actualisation de la table de commutation peut consister en un repérage par la couche 8 de paquets de signalisation L2CAP de type CONNECTION REQUEST et CONNECTION RESPONSE utilisés lors de l'établissement d'une connexion entre une unité esclave et l'unité maître. Ce repérage est concentré initialement sur les paquets de signalisation CONNECTION REQUEST contenant une valeur de PSM correspondant à l'application concernée. Les paquets de signalisation CONNECTION RESPONSE associés contiennent alors les CID appariés affectés à des échanges bilatéraux entre une unité esclave donnée et l'unité maître 1 pour cette application. La couche 8 adresse alors ces éléments au programme d'application 11 par un paquet HCl spécialement dédié. De la même façon que dans la première méthode d'actualisation, le programme d'application 11 retourne au processeur 3 une instruction d'association d'éléments d'adressage nécessaire à l'orientation des paquets HCl 50, 60, 70,... A l'inverse, une telle association est supprimée lors du repérage par la couche 8 de paquets L2CAP de fermeture d'une connexion intervenant dans l'association.

Un avantage de cette seconde méthode est d'être entièrement interne à l'unité maître 1, par opposition à la première méthode qui nécessite un échange spécifique de paquets de données entre l'unité maître 1 et les unités esclaves.

La couche 8 «HCl firmware» dispose donc d'associations entre des éléments d'adressage pour chaque programme d'application 11 résidant dans le processeur hôte 2, identifié par le PSM de l'application. La consigne de ré-adressage élaborée à partir de ces associations comprend la table de commutation et la condition de ré-adressage. Ces éléments de la consigne de ré-adressage permettent l'élaboration, au niveau de la couche 8, d'un programme d'orientation des paquets HCl. Des lignes d'instructions de ce programme sont données ci-dessous à titre d'exemple, en référence aux figures 3 et 4, pour le traitement d'un paquet HCl ACL Data en provenance de l'esclave 100, dans le cas où des CID distincts sont utilisés pour des données destinées à l'unité esclave 200 ou à l'unité maître 1:
*Si PB = 01, alors*
   *lire le Local_CID dans le champ de données*
   *si Local_CID ∈ liste des CID commutés, alors*
   *lire Destinataire_CID (de l'unité esclave 200) dans la table de commutation*
   *lire le BD_ADDR de l'unité destinataire final (de l'unité esclave 200)*
   *chercher le «connection handle (BD_ADDR)»*
   *construire un nouveau paquet HCl ACL Data*
   *champ 51 ← «connection handle (BD_ADDR)»*
   *champ 52 ← "01"*
   *champs 53 et* 54 : *identiques à ceux du paquet HCl reçu*
   *champ 55 contenant le début d'un paquet L2CAP 80 :*
   *champ 81 identique à celui contenu dans le paquet HCl reçu*
   *champ 82 ← Destinataire_CID*
   *champ 83 identique à celui contenu dans le paquet HCl reçu*
   *envoyer le nouveau paquet HCl ACL Data*
   *indicateur de série de paquets HCl en cours* ← *VRAI*
   *Sinon*
   *envoyer le paquet HCl ACL Data reçu par l'interface 4a*
   *indicateur de série de paquets HCl en cours* ← *FAUX*
   *Fin Si*
   *Sinon (PB = 10)*
   *Si indicateur de série de paquets HCl en cours = VRAI*
   *construire un nouveau paquet HCl ACL Data*
   *champ 51 ← «connection handle (BD_ADDR)» (le même que pour le dernier paquet HCl dans lequel PB = 01)*
   *champs* 52-55 *identiques à ceux du paquet reçu*
   *transmettre le paquet HCl ACL Data reçu à la couche LC 6*
   *Sinon*
   *envoyer le paquet HCl ACL Data reçu par l'interface 4a*
   *Fin Si*
   *Fin Si.*

## Revendications

1. Procédé de transmission de paquets de données par radio au sein d'un réseau local comprenant au moins trois unités de communication, l'une de ces unités (1) ayant un rôle d'unité maître et les autres unités (100, 200) ayant un rôle d'unités esclaves coordonnées par l'unité maître, l'unité maître comprenant un premier (2) et un second (3) processeurs reliés entre eux par une connexion (4) interne à l'unité maître, le premier processeur exécutant une application et le second processeur exécutant des opérations de transmission de données entre l'unité maître et l'une quelconque des unités esclaves, procédé dans lequel la transmission de données produites par une première unité esclave à destination d'une seconde unité esclave comprend les étapes suivantes :
a- émission de premiers paquets de données (50, 60, 70) par la première unité esclave ;
b- réception des premiers paquets de données par l'unité maître;
c- au niveau d'une couche de protocole assurant une mise en forme et un rétablissement de données échangées par la connexion (4) interne à l'unité maître, analyse par le second processeur d'éléments d'adressage associés aux premiers paquets de données pour déterminer si certains éléments d'adressage satisfont une condition spécifiée dans une consigne de ré-adressage ; et
d- si la condition est satisfaite, émission par l'unité maître à destination de la seconde unité esclave de seconds paquets de données correspondant aux premiers paquets de données.

2. Procédé selon la revendication 1, dans lequel, lors de l'étape d, si certains des éléments d'adressage analysés ne satisfont pas la condition spécifiée, le second processeur (3) transmet au premier processeur (2) une partie au moins des données correspondant aux premiers paquets de données par la connexion (4) interne à l'unité maître (1).

3. Procédé selon la revendication 1 ou 2, dans lequel la consigne de ré-adressage est produite à partir d'éléments d'adressage associés entre eux par l'application (11) exécutée dans le premier processeur (2), et transmis au second processeur (3) par la connexion (4) interne à l'unité maître (1).

4. Procédé selon la revendication 3, dans lequel les éléments d'adressage à partir desquels est produite la consigne de ré-adressage sont obtenus par interrogation des unités esclaves (100, 200) par l'unité maître (1).

5. Procédé selon la revendication 3, dans lequel les éléments d'adressage à partir desquels, est produite la consigne de ré-adressage sont lus par le second processeur (3) dans des paquets de signalisation échangés lors d'établissements de connexions entre des unités esclaves et l'unité maître.

6. Procédé selon l'une quelconque des revendications précédentes, dans lequel les seconds paquets de données émis lors de l'étape d sont obtenus par le second processeur (3) à partir des premiers paquets de données (50, 60, 70) auxquels ils correspondent en remplaçant, pour certains au moins des premiers paquets, des éléments d'adressage initiaux par des nouveaux éléments d'adressage correspondant à la seconde unité esclave.

7. Procédé selon la revendication 6, dans lequel les éléments d'adressage remplacés comprennent un indicatif de connexion (51) dans chaque premier paquet et/ou une référence de canal logique (82).

8. Procédé selon la revendication 6 ou 7, dans lequel l'étape c d'analyse d'éléments d'adressage associés aux premiers paquets (50, 60, 70) de données comprend une étape de lecture d'au moins un élément d'adressage comprenant une référence de canal logique (82) dans certains au moins des premiers paquets de données.

9. Procédé selon la revendication 8, dans lequel la seconde unité esclave (200) et l'unité maître (1) sont associées à des canaux logiques respectifs distincts pour des paquets émis par la première unité esclave (100) et contenant des données destinées soit à la seconde unité esclave soit à l'unité maître, et dans lequel les nouveaux éléments d'adressage sont déterminés en utilisant la référence de canal logique lue (82).

10. Procédé selon la revendication 8, dans lequel la seconde unité esclave (200) et l'unité maître (1) sont associées à des canaux logiques identiques pour des paquets émis par la première unité esclave (100) et contenant des données destinées soit à la seconde unité esclave soit à l'unité maître, dans lequel l'étape c d'analyse d'éléments d'adressage associés aux premiers paquets (50, 60, 70) de données comprend une étape de lecture d'au moins un élément d'adressage supplémentaire comprenant un indicateur de l'unité de communication destinataire des données dans certains au moins des premiers paquets de données, et dans lequel les nouveaux éléments d'adressage sont déterminés en utilisant l'indicateur lu de l'unité de communication destinataire des données.

11. Procédé selon l'une quelconque des revendications précédentes, dans lequel les données sont contenues dans une série de premiers paquets de données (50, 60, 70) successivement émis par la première unité esclave (100), et dans lequel une partie au moins des éléments d'adressage associés aux dits premiers paquets de la série est portée par un paquet de ladite série émis avant les autres paquets de ladite série.

12. Système de transmission de paquets de données par radio comprenant au moins trois unités de communication, l'une de ces unités (1) ayant un rôle d'unité maître et les autres unités (100, 200) ayant un rôle d'unités esclaves coordonnées par l'unité maître, l'unité maître comprenant des moyens pour gérer une transmission de données échangées avec l'une quelconque des unités esclaves, et l'unité maître comprenant un premier (2) et un second (3) processeurs reliés entre eux par une connexion (4) disposée pour transmettre des données entre les deux processeurs, le premier processeur étant agencé pour exécuter une application et le second processeur étant agencé pour exécuter des opérations de transmission de données entre l'unité maître et l'une quelconque des unités esclaves, le système étant adapté pour la mise en oeuvre d'un procédé de transmission selon l'une quelconque des revendications 1 à 11.

13. Processeur de contrôle (3) d'une transmission de données par radio sous forme de paquets de données comprenant une interface (4a) permettant de connecter ledit processeur de contrôle à un processeur hôte (2) d'une application, et comprenant en outre :
- des moyens de réception par l'interface de connexion (4a) de signaux correspondant à des éléments d'adressage associés entre eux ;
- des moyens d'élaboration d'une consigne de ré-adressage à partir des éléments d'adressage associés entre eux, la consigne de ré-adressage comprenant une condition de ré-adressage;
- des moyens d'enregistrement de la consigne de ré-adressage;
- des moyens d'analyse, au niveau d'une couche de protocole assurant une mise en forme et un rétablissement de données échangées par l'interface de connexion (4a), de paquets de données reçus en fonction de la condition de ré-adressage ;
- des moyens de remplacement d'éléments d'adressage initiaux de certains au moins des paquets de données reçus satisfaisant la condition de ré-adressage par de nouveaux éléments d'adressage déterminés d'après la consigne de ré-adressage ; et
- des moyens de commande d'une émission de paquets de données correspondant aux paquets de données reçus satisfaisant la condition de ré-adressage.

14. Processeur de contrôle selon la revendication 13, comprenant en outre des moyens de transmission par l'interface de connexion (4a) de données correspondant à des paquets reçus ne satisfaisant pas la condition de ré-adressage.

15. Processeur de contrôle selon la revendication 13 ou 14, dans lequel les moyens de remplacement d'éléments d'adressage comprennent des moyens de remplacement d'un indicatif de connexion (51) et/ou d'une référence de canal logique (82).

16. Processeur de contrôle selon l'une quelconque des revendications 13 à 15, comprenant des moyens de lecture dans certains au moyens des paquets reçus d'une référence de canal logique et/ou d'un indicateur de l'unité de communication destinataire des données contenues dans les paquets reçus.

17. Unité de communication (1) par radio comprenant un processeur de contrôle selon l'une quelconque des revendications 13 à 16.

18. Processeur hôte (2) d'au moins une application comprenant des moyens d'exécution de l'application, des moyens de gestion de communications au sein d'un réseau local en tant qu'unité maître, et des moyens pour associer des éléments d'adressage de paquets de données entre eux, le processeur hôte comprenant en outre une interface (4b) de connexion d'un processeur de contrôle (3) d'une transmission de paquets de données au sein du réseau local, et des moyens de transmission par l'interface de connexion de signaux correspondant aux éléments d'adressage associés entre eux ou porteurs de données traitées par l'application, les éléments d'adressage étant associés aux paquets de données au niveau d'une couche de protocole assurant une mise en forme et un rétablissement de données échangées par l'interface de connexion (4b).

## Claims

1. Method for transmitting data packets by radio within a local network comprising at least three communication units, one of these units (1) having a role of master unit and the other units (100, 200) having a role of slave units co-ordinated by the master unit, the master unit comprising a first (2) and a second (3) processor interlinked by a connection (4) internal to the master unit, the first processor executing an application and the second processor executing operations of data transmission between the master unit and any one of the slave units, in which method the transmission of data produced by a first slave unit to a second slave unit comprises the following steps:
a - sending of first data packets (50, 60, 70) by the first slave unit;
b - reception of the first data packets by the master unit;
c - analysis by the second processor, at a level of a protocol layer which provides formatting and restoration of data exchanged via the connection (4) internal to the master unit, of addressing elements associated with the first data packets so as to determine whether certain addressing elements meet a condition specified in a readdressing directive; and
d - if the condition is met, sending by the master unit to the second slave unit of second data packets corresponding to the first data packets.

2. Method according to Claim 1, wherein, during step d, if certain of the addressing elements analysed do not meet the specified condition, the second processor (3) transmits a part at least of the data corresponding to the first data packets to the first processor (2) through the connection (4) internal to the master unit (1).

3. Method according to Claim 1 or 2, wherein the readdressing directive is produced from addressing elements interassociated by the application (11) executed in the first processor (2), and transmitted to the second processor (3) through the connection (4) internal to the master unit (1).

4. Method according to Claim 3, wherein the addressing elements from which the readdressing directive is produced are obtained by interrogation of the slave units (100, 200) by the master unit (1).

5. Method according to Claim 3, wherein the addressing elements from which the readdressing directive is produced are read by the second processor (3) from signalling packets exchanged when connections are set up between slave units and the master unit.

6. Method according to any one of the preceding claims, wherein the second data packets sent during step d are obtained by the second processor (3) from the first data packets (50, 60, 70) to which they correspond by replacing, for certain at least of the first packets, initial addressing elements by new addressing elements corresponding to the second slave unit.

7. Method according to Claim 6, wherein the replaced addressing elements comprise a connection handle (51) in each first packet and/or a logical channel reference (82).

8. Method according to Claim 6 or 7, wherein step c of analysis of addressing elements associated with the first data packets (50, 60, 70) comprises a step of reading at least one addressing element comprising a logical channel reference (82) in certain at least of the first data packets.

9. Method according to Claim 8, wherein the second slave unit (200) and the master unit (1) are associated with respective logical channels which are distinct in regard to packets sent by the first slave unit (100) and containing data intended either for the second slave unit or for the master unit, and wherein the new addressing elements are determined by using the logical channel reference read (82).

10. Method according to Claim 8, wherein the second slave unit (200) and the master unit (1) are associated with logical channels which are identical with regard to packets sent by the first slave unit (100) and containing data intended either for the second slave unit or for the master unit, wherein step c of analysis of addressing elements associated with the first data packets (50, 60, 70) comprises a step of reading at least one additional addressing element comprising an indicator of the recipient communication unit for the data in certain at least of the first data packets, and wherein the new addressing elements are determined by using the indicator read from the recipient communication unit for the data.

11. Method according to any one of the preceding claims, wherein the data are contained in a series of first data packets (50, 60, 70) sent successively by the first slave unit (100), and wherein a part at least of the addressing elements associated with said first packets of the series is carried by a packet of said series which is sent before the other packets of said series.

12. System for transmitting data packets by radio comprising at least three communication units, one of these units (1) having a role of master unit and the other units (100, 200) having a role of slave units co-ordinated by the master unit, the master unit comprising means for managing a transmission of data exchanged with any one of the slave units, and the master unit comprising a first (2) and a second (3) processor interlinked by a connection (4) disposed so as to transmit data between the two processors, the first processor being devised so as to execute an application and the second processor being devised so as to execute operations of data transmission between the master unit and any one of the slave units, the system being adapted for the implementation of a method of transmission according to any one of Claims 1 to 11.

13. Control processor (3) for controlling a transmission of data by radio in the form of data packets comprising an interface (4a) making it possible to connect said control processor to a host processor (2) of an application, and furthermore comprising:
- means of reception by the connection interface (4a) of signals corresponding to interassociated addressing elements;
- means of formation of a readdressing directive from the interassociated addressing elements, the readdressing directive comprising a readdressing condition;
- means for recording the readdressing directive;
- means for analysing, at a level of a protocol layer which provides formatting and restoration of data packets exchanged via the connection interface (4a), data packets received as a function of the readdressing condition;
- means for replacing initial addressing elements of certain at least of the data packets received meeting the readdressing condition by new addressing elements determined in accordance with the readdressing directive; and
- means for controlling a sending of data packets corresponding to the data packets received meeting the readdressing condition.

14. Control processor according to Claim 13, furthermore comprising means of transmission by the connection interface (4a) of data corresponding to packets received not meeting the readdressing condition.

15. Control processor according to Claim 13 or 14, wherein the means for replacing addressing elements comprise means for replacing a connection handle (51) and/or a logical channel reference (82).

16. Control processor according to any one of Claims 13 to 15, comprising means for reading from certain at least of the packets received a logical channel reference and/or an indicator of the recipient communication unit for the data contained in the packets received.

17. Unit (1) for communication by radio comprising a control processor according to any one of Claims 13 to 16.

18. Host processor (2) for at least one application comprising means for executing the application, means for managing communications within a local network as a master unit, and means for interassociating data packet addressing elements, the host processor furthermore comprising an interface (4b) for connecting a control processor (3) for controlling a transmission of data packets within the local network, and means of transmission through the connection interface of signals corresponding to the interassociated addressing elements or signals carrying data processed by the application, the addressing elements being associated with the data packets at a level of a protocol layer which provides formatting and restoration of data exchanged via the connection interface (4b).

## Patentansprüche

1. Verfahren zur Funkübertragung von Datenpaketen in einem örtlichen Netz, das mindestens drei Kommunikationseinheiten umfasst, wobei eine dieser Einheiten (1) die Rolle einer Master-Einheit spielt und die anderen Einheiten (100, 200) die Rolle von Slave-Einheiten spielen, die durch die Master-Einheit koordiniert werden, wobei die Master-Einheit einen ersten (2) und einen zweiten (3) Prozessor umfasst, die miteinander durch eine interne Verbindung (4) der Master-Einheit verbunden sind, wobei der erste Prozessor eine Anwendung ausführt und der zweite Prozessor Datenübertragungsoperationen zwischen der Master-Einheit und einer der Slave-Einheiten ausführt, wobei in diesem Verfahren die Übertragung von durch eine erste Slave-Einheit erzeugten Daten zu einer zweiten Slave-Einheit die folgenden Schritte umfasst:
a - Sendung von ersten Datenpaketen (50, 60, 70) durch die erste Slave-Einheit;
b - Empfang der ersten Datenpakete durch die Master-Einheit;
c - auf Höhe einer Protokollschicht, die eine Formung und eine Wiederherstellung von über die interne Verbindung (4) der Master-Einheit ausgetauschten Daten gewährleistet, Analyse von den ersten Datenpaketen zugeordneten Adressierungselementen durch den zweiten Prozessor, um zu bestimmen, ob gewisse Adressierungselemente eine in einer Umadressierungsvorschrift spezifizierte Bedingung erfüllen; und
d - wenn die Bedingung erfüllt ist, Sendung von zweiten Datenpaketen, die den ersten Datenpaketen entsprechen, durch die Master-Einheit zur zweiten Slave-Einheit.

2. Verfahren nach Anspruch 1, bei dem im Schritt d, wenn manche der analysierten Adressierungselemente nicht die spezifizierte Bedingung erfüllen, der zweite Prozessor (3) zum ersten Prozessor (2) mindestens einen Teil der den ersten Datenpaketen entsprechenden Daten über die interne Verbindung (4) der Master-Einheit (1) überträgt.

3. Verfahren nach Anspruch 1 oder 2, bei dem die Umadressierungsvorschrift aus Adressierungselementen erzeugt wird, die durch die im ersten Prozessor (2) ausgeführte Anwendung (11) einander zugeordnet werden und durch die interne Verbindung (4) der Master-Einheit (1) zum zweiten Prozessor (3) übertragen werden.

4. Verfahren nach Anspruch 3, bei dem die Adressierungselemente, aus denen die Umadressierungsvorschrift erzeugt wird, durch Abfrage der Slave-Einheiten (100, 200) durch die Master-Einheit (1) erhalten werden.

5. Verfahren nach Anspruch 3, bei dem die Adressierungselemente, aus denen die Umadressierungsvorschrift erzeugt wird, von dem zweiten Prozessor (3) in Signalisierungspaketen gelesen werden, die bei der Herstellung von Verbindungen zwischen Slave-Einheiten und der Master-Einheit ausgetauscht werden.

6. Verfahren nach einem der vorhergehenden Ansprüche, bei dem die im Schritt d gesendeten zweiten Datenpakete von dem zweiten Prozessor (3) aus den ersten Datenpaketen (50, 60, 70) erhalten werden, denen sie entsprechen, indem sie mindestens bei manchen der ersten Pakete ursprüngliche Adressierungselemente durch neue, der zweiten Slave-Einheit entsprechende Adressierungselemente ersetzen.

7. Verfahren nach Anspruch 6, bei dem die ersetzten Adressierungselemente eine Anschlusskennung (51) in jedem ersten Paket und/oder einen Logikkanalbezug (82) umfassen.

8. Verfahren nach Anspruch 6 oder 7, bei dem der Schritt c der Analyse von den ersten Datenpaketen (50, 60, 70) zugeordneten Adressierungselementen einen Schritt des Lesens mindestens eines Adressierungselements, das einen Logikkanalbezug (82) umfasst, in mindestens manchen der ersten Datenpakete umfasst.

9. Verfahren nach Anspruch 8, bei dem die zweite Slave-Einheit (200) und die Master-Einheit (1) jeweiligen verschiedenen Logikkanälen für Pakete zugeordnet sind, die von der ersten Slave-Einheit (100) gesendet werden und Daten enthalten, die entweder für die zweite Slave-Einheit oder für die Master-Einheit bestimmt sind, und bei dem die neuen Adressierungselemente bestimmt werden, indem der gelesene Logikkanalbezug (82) verwendet wird.

10. Verfahren nach Anspruch 8, bei dem die zweite Slave-Einheit (200) und die Master-Einheit (1) identischen Logikkanälen für Pakete zugeordnet sind, die von der ersten Slave-Einheit (100) gesendet werden und Daten enthalten, die entweder für die zweite Slave-Einheit oder für die Master-Einheit bestimmt sind, bei dem der Schritt c der Analyse von den ersten Datenpaketen (50, 60, 70) zugeordneten Adressierungselementen einen Schritt des Lesens mindestens eines zusätzlichen Adressierungselements, das ein Kennzeichen der Kommunikationseinheit umfasst, für die die Daten bestimmt sind, in mindestens manchen der ersten Datenpakete umfasst und bei dem die neuen Adressierungselemente bestimmt werden, indem das gelesene Kennzeichen der Kommunikationseinheit, für die die Daten bestimmt sind, verwendet wird.

11. Verfahren nach einem der vorhergehenden Ansprüche, bei dem die Daten in einer Reihe von ersten Datenpaketen (50, 60, 70) enthalten sind, die nacheinander von der ersten Slave-Einheit (100) gesendet werden, und bei dem mindestens ein Teil der den ersten Paketen der Reihe zugeordneten Adressierungselemente von einem Paket dieser Reihe getragen ist, das vor den anderen Paketen dieser Reihe gesendet wird.

12. System zur Funkübertragung von Datenpaketen, umfassend mindestens drei Kommunikationseinheiten, wobei eine dieser Einheiten (1) die Rolle einer Master-Einheit spielt und die anderen Einheiten (100, 200) die Rolle von Slave-Einheiten spielen, wobei die Master-Einheit Mittel zum Verwalten einer Übertragung von mit einer der Slave-Einheiten ausgetauschten Daten umfasst, und die Master-Einheit einen ersten (2) und einen zweiten (3) Prozessor umfasst, die miteinander durch eine Verbindung (4) verbunden sind, die angeordnet ist, um Daten zwischen den beiden Prozessoren zu übertragen, wobei der erste Prozessor ausgebildet ist, um eine Anwendung auszuführen und der zweite Prozessor ausgebildet ist, um Datenübertragungsoperationen zwischen der Master-Einheit und einer der Slave-Einheiten auszuführen, wobei das System für die Durchführung eines Übertragungsverfahrens nach einem der Ansprüche 1 bis 11 ausgelegt ist.

13. Prozessor (3) zur Steuerung einer Funkübertragung von Daten in Form von Datenpaketen, umfassend eine Schnittstelle (4a), die die Verbindung des Steuerprozessors mit einem Host-Prozessor (2) einer Anwendung gestattet, und umfassend ferner:
- Mittel zum Empfangen von Signalen, die einander zugeordneten Adressierungselementen entsprechen, durch die Verbindungsschnittstelle (4a);
- Mittel zur Erarbeitung einer Umadressierungsvorschrift aus einander zugeordneten Adressierungselementen, wobei die Umadressierungsvorschrift eine Umadressierungsbedingung umfasst;
- Mittel zum Aufzeichnen der Umadressierungsvorschrift;
- Mittel zur Analyse von in Abhängigkeit von der Umadressierungsbedingung empfangenen Datenpaketen auf Höhe einer Protokollschicht, die eine Formung und eine Wiederherstellung von durch die Verbindungsschnittstelle (4a) ausgetauschten Daten gewährleistet;
- Mittel zum Ersetzen von ursprünglichen Adressierungselementen von mindestens manchen der empfangenen Datenpakete, die die Umadressierungsbedingung erfüllen, durch neue Adressierungselemente, die nach der Umadressierungsvorschrift bestimmt werden; und
- Mittel zum Steuern einer Sendung von Datenpaketen, die den die Umadressierungsbedingung erfüllenden empfangenen Daten entsprechen.

14. Steuerprozessor nach Anspruch 13, umfassend außerdem Mittel zum Übertragen von Daten, die empfangenen Paketen entsprechen, die nicht die Umadressierungsbedingung erfüllen, über die Verbindungsschnittstelle (4a).

15. Steuerprozessor nach Anspruch 13 oder 14, bei dem die Mittel zum Ersetzen von Adressierungselementen Mittel zum Ersetzen eines Verbindungskennzeichens (51) und/oder eines Logikkanalbezugs (82) umfassen.

16. Steuerprozessor nach einem der Ansprüche 13 bis 15, umfassend Mittel zum Lesen eines Logikkanalbezugs und/oder eines Kennzeichens der Kommunikationseinheit, für die die in den empfangenen Paketen enthaltenen Daten bestimmt sind, in mindestens manchen der empfangenen Pakete.

17. Funkkommunikationseinheit (1), umfassend einen Steuerprozessor nach einem der Ansprüche 13 bis 16.

18. Host-Prozessor (2) mindestens einer Anwendung, umfassend Mittel zur Durchführung der Anwendung, Mittel zur Verwaltung der Kommunikation in einem örtlichen Netz als Master-Einheit und Mittel zum Zuordnen von Adressierungselementen von Datenpaketen zueinander, wobei der Host-Prozessor außerdem eine Schnittstelle (4b) zur Verbindung eines Prozessors (3) zur Steuerung einer Übertragung von Datenpaketen in einem örtlichen Netz umfasst, und Mittel zur Übertragung von Signalen, die den Adressierungselementen entsprechen, die einander zugeordnet sind, oder durch die Anwendung behandelte Daten tragen, durch die Verbindungsschnittstelle, wobei die Adressierungselemente den Datenpaketen auf Höhe einer Protokollschicht zugeordnet sind, die eine Formung und eine Wiederherstellung von durch die Verbindungsschnittstelle (4b) ausgetauschten Datenpaketen gewährleistet.
